# EUROPÄISCHE PATENTSCHRIFT

(11) **EP 2 416 130 B1**
(45) Veröffentlichungstag und Bekanntmachung des Hinweises auf die Patenterteilung: **12.06.2013**
(21) Anmeldenummer: 10171987.0
(22) Anmeldetag: 05.08.2010
(51) Int. Cl.: G01G 21/28, G01G 23/01

(54) **Gerät, insbesondere Waage, mit eichrelevanten Bauteilen**
Device, in particular scale with calibrating components
Appareil, notamment balance dotée d'éléments d'étalonnage

(43) Veröffentlichungstag der Anmeldung: 08.02.2012
(73) Patentinhaber: Mettler-Toledo (Albstadt) GmbH, 72458 Albstadt (DE)
(72) Erfinder: Schön, Thomas, 72336, Balingen (DE)
(74) Vertreter: Mettler-Toledo

(56) Entgegenhaltungen:
- DE-A1- 4 445 526
- DE-A1- 19 747 323
- DE-A1-102006 052 486
- US-A- 5 086 879

## Beschreibung

Die vorliegende Erfindung bezieht sich auf ein Gerät, insbesondere eine Waage, mit eichrelevanten Bauteilen.

Aus dem Stand der Technik sind Methoden zur elektronischen Sicherung von eichrelevanten Daten bekannt. Aus DE 44 45 526 C2 ist eine Waage bekannt, bei der der Messwertgeber einem Schaltelement zugeordnet ist und das Schaltelement eichtechnisch versiegelt ist. Um eichrelevante Daten ändern zu können, muss das Schaltelement umgelegt werden. Eine vergleichbare Waage lässt sich auch der US 50 868 79 A entnehmen. Aus DE 197 47 323 C2 ist eine durch Passwort geschützte elektronische Eichsicherung bekannt. Aus DE 20 2006 052 486 A1 ist die Steuerung einer Waage bekannt zu deren Sicherung ein Sicherheitsstecker (Dongel) verwendet wird. Aus der CH 690 949 A5 ist ein Gerät bekannt, das eine Serviceplombe und eine Eichplombe aufweist, von zwei getrennte Gehäuseteile zu *s*chötzen,

Zur mechanischen Sicherung von eichrelevanten Bauteilen, werden die eichrelevanten Bauteile in einem Gehäuse unterbracht. Durch eine autorisierte Person, beispielsweise einem staatlichen Eichbeamten oder einem anderen Beauftragten, wird das Gerät in einen für die Eichung erforderlichen Zustand gebracht. Anschliessend wird das Gehäuse verschlossen und mit einer Eichmarke versehen. Die Eichmarke dient der Dokumentation der Eichung. Mit Hilfe der Eichmarke wird ein unbemerkter bzw. unbefugter Zugriff auf die eichrelevanten Bauteile verhindert. Aus dem Stand der Technik bekannte Eichmarken sind beispielsweise Eichsiegel, Eichstempel oder Plomben. Die Eichmarke wird derart auf dem verschlossenen Gehäuse angebracht, dass beim Öffnen des Gehäuses die Eichmarke zerstört wird. Eine nichtzerstörte Eichmarke ist somit ein Beweis, dass das Gehäuse nicht geöffnet wurde.

In einem Gehäuse werden ausser den eichrelevanten Bauteilen normalerweise zusätzlich nicht-eichrelevante Bauteile untergebracht. Nicht-eichrelevante Bauteile können beispielsweise Stromanschlüsse, Batterien oder ähnliche Bauteile sein.

Weist ein Gerät die eichtechnisch notwendigen Voraussetzungen auf, wird das Gehäuse des Geräts verschlossen und mit einer Eichmarke vor unbefugtem Zugriff geschützt. Dadurch erlangt das Gerät den Status "geeicht". Muss auf ein nicht-eichrelevantes Bauteil zugegriffen werden, muss das Gehäuse geöffnet werden und die Eichmarke wird zwangsläufig zerstört. Durch die Zerstörung der Eichmarke wird das Gerät in den Status "enteicht" zurückgesetzt. Um wieder den Status "geeicht" erlangen zu können, muss eine autorisierte Person das Gerät prüfen und die Eichmarke muss wieder angebracht werden. Diese Prüfung erfordert Zeit und verursacht Kosten. Dieses Problem wird dadurch umgangen, indem eichrelevanten Bauteile im Gehäuse derart unter einer Eichkappe angeordnet, dass die eichrelevanten Bauteile nur durch Entfernen dieser Eichkappe zugänglich sind. Ausserdem ist die Eichkappe durch eine Eichmarke gesichert. Bei einer Entfernung der Eichkappe wird zwangsläufig die Eichmarke beschädigt. Eine unbeschädigte Eichmarke ist somit der Beweis, dass die Eichkappe nicht entfernt wurde und keine Veränderungen an den eichrelevanten Bauteilen vorgenommen werden konnten. Das Gerät behält somit den Status "geeicht".

Bei den aus dem Stand der Technik bekannten Geräten sind die Eichmarken im Innern des Gehäuses angeordnet. Bei einer Überprüfung des Geräts durch einen Eichbeamten muss das Gerät geöffnet werden. Für das Öffnen des Geräts ist oft ein speziell ausgebildeter Servicetechniker notwendig. Infolgedessen muss für eine Überprüfung des Eichzustands sowohl ein Eichbeamter als auch ein Servicetechniker vor Ort sein, was mit erheblichem organisatorischem Aufwand und Kosten verbunden ist. Beim Öffnen des Geräts kann das Problem auftreten, dass das Gehäuse und/oder die zwischen den Gehäuseteilen angeordneten Dichtungen beschädigt werden.

Aufgabe der Erfindung ist es die Nachteile des Stands der Technik zu beheben. Insbesondere soll ein Gerät geschaffen werden, das möglichst einfach auf seinen Eichzustand überprüft werden kann.

Diese Aufgabe wird durch ein Gerät gelöst, welches die im unabhängigen Patentanspruch angegebenen Merkmale aufweist. Weitere vorteilhafte Ausführungsformen können den abhängigen Ansprüchen entnommen werden.

Das erfindungsgemässe Gerät weist ein Gehäuse zur Aufnahme von eichrelevanten und nicht-eichrelevanten Bauteilen auf. Dabei sind die eichrelevanten Bauteile im Gehäuse derart unter einer Eichkappe angeordnet, dass die eichrelevanten Bauteile nur durch Entfernen dieser Eichkappe zugänglich sind. Ausserdem ist die Eichkappe durch eine Eichmarke gesichert. Bei einer Entfernung der Eichkappe wird zwangsläufig die Eichmarke beschädigt. Als Eichmarke kann beispielsweise ein Eichsiegel, ein Eichstempel oder eine Plombe verwendet werden. Eine unbeschädigte Eichmarke ist somit der Beweis, dass die Eichkappe nicht entfernt wurde und keine Veränderungen an den eichrelevanten Bauteilen vorgenommen werden konnten. Das Gerät behält somit den Status "geeicht". Ausserdem ist die Eichkappe mit mindestens einem Sicherungselement fixiert und die unter der Eichkappe angeordneten eichrelevanten Bauteile sind nur nach dem Entfernen des Sicherungselements zugänglich sind, wobei mindestens ein Sicherungselement bei geschlossenem Gehäuse entfernbar ist.

Das von aussen entfernbare Sicherungselement kann mit einer Eichmarke vor unbemerkter Manipulation geschützt werden. Idealerweise wird die Eichmarke so angebracht, dass sie bei geschlossenem Gehäuse sichtbar ist. Diese Ausgestaltung hat den Vorteil, dass die Eichmarke bei geschlossenem Gehäuse begutachtet werden kann. Die Überprüfung des Eichzustands des Geräts durch einen Eichbeamten ist dadurch wesentlich einfacher. Bei den aus dem Stand der Technik bekannten Geräten sind die Eichmarken im Innern des Gehäuses angeordnet. Bei einer Überprüfung des Geräts durch einen Eichbeamten muss das Gerät geöffnet werden. Für das Öffnen des Geräts ist oft ein speziell ausgebildeter Servicetechniker notwendig. Infolgedessen muss für eine Überprüfung des Eichzustands sowohl ein Eichbeamter als auch ein Servicetechniker vor Ort sein, was mit erheblichem organisatorischem Aufwand und Kosten verbunden ist. Beim Öffnen des Geräts kann das Problem auftreten, dass das Gehäuse und/oder die zwischen den Gehäuseteilen angeordneten Dichtungen beschädigt werden. Auch dieses Problem wird durch die aussen angebrachte Eichmarke umgangen, da das Gehäuse für die Überprüfung der Eichung nicht geöffnet werden muss.

Die Eichkappe ist mit mindestens einem Sicherungselement fixiert und die unter dieser Eichkappe angeordneten eichrelevanten Bauteile sind nur nach dem Entfernen des Sicherungselements zugänglich. Mit dem Sicherungselement wird sicher gestellt, dass die Eichkappe über den eichrelevanten Bauteilen fixiert bleibt. Das Sicherungselement muss jedoch entfernbar sein, falls Veränderungen an den eichrelevanten Bauteilen vorgenommen werden müssen. Das Sicherungselement kann ein beliebiges Befestigungselement sein, das bei Bedarf ganz oder teilweise entfernt werden kann. Durch die Entfernung des Sicherungselements wird die Eichung des Geräts aufgehoben. Dies bietet den Vorteil, dass die Eichung des Geräts aufgehoben werden kann ohne dass das Gehäuse geöffnet werden muss.

Das Sicherungselement kann eine Schraube sein und die Eichkappe kann ein Gewinde aufweisen, das der Aufnahme der Schraube des Sicherungselements dient. Das Sicherungselement wird im Gewinde fixiert. Durch die im Gewinde fixierte Schraube wird die Eichkappe über den eichrelevanten Bauteilen fixiert. Die Schraube wird mit einer Eichmarke versehen und dadurch vor unautorisiertem Zugriff geschützt. Idealerweise wird das Sicherungselement zusätzlich durch das Gehäuse geführt. Dabei kann das Sicherungselement nur von Aussen gelöst und/oder entfernt werden. Eine Entfernung des Sicherungselements von Innen ist nicht möglich. Diese Ausgestaltung bietet den Vorteil, dass die Eichmarke von Aussen auf dem Sicherungselement angebracht werden kann und somit die Unversehrtheit der Eichmarke überprüft werden kann ohne dass das Gehäuse geöffnet werden muss.

In einer bevorzugten Ausführungsform sind die eichrelevanten Bauteile auf einem Trägerelement angeordnet, wobei das Trägerelement unter der Eichkappe angeordnet ist. Das Trägerelement kann beispielsweise eine Platine sein.

Vorteilhafterweise weist das Gerät einen Sensor zur Erfassung eines Positionswechsels des Sicherungselements auf. Der Sensor kann somit erfassen, falls sich der Status des Geräts von "geeicht" zu "enteicht" ändert. Falls das Sicherungselement eine Schraube ist, ist der Sensor so angeordnet dass ein Herausdrehen der Schraube erfasst wird. Als Sensoren können beispielsweise Lichtsensoren oder Drucksensoren eingesetzt werden. Lichtsensoren können derart angeordnet sein, dass im geeichten Zustand eine Lichtschranke durch das Sicherungselement unterbrochen ist. Wird zur Enteichung das Sicherungselement zumindest teilweise entfernt, wird die Lichtschranke geschlossen und das Gerät ändert seinen Status von "geeicht" zu "enteicht". Ein Drucksensor kann derart angeordnet sein, dass im geeichten Zustand das Sicherungselement gegen den Drucksensor drückt. Im enteichten Zustand wird das Sicherungselement zumindest teilweise entfernt und das Sicherungselement drückt nicht auf den Drucksensor. Es ist jedoch auch der Einsatz von anderen Sensoren und anderen Anordnungen möglich.

Der Sensor gibt ein Signal aus, das Informationen über den Positionswechsel des Sicherungselements beinhaltet. Dieses Signal kann an eine Ausgabeeinheit übermittelt werden und dort weiterverwendet werden. Eine mögliche Ausgabeneinheit ist eine Anzeigeeinheit des Geräts. Die Anzeigeeinheit ist beispielsweise ein Monitor. Der Benutzer kann vom Monitor ablesen ob das Gerät den Status "geeicht" oder "enteicht" aufweist.

In einer bevorzugten Ausführungsform ist das Gerät eine Waage mit einer Lastaufnahme und einer Anzeige- und Bedieneinheit. Die eichrelevanten Bauteile sind im Gehäuse der Anzeige- und Bedieneinheit angeordnet. Das Gehäuse weist ein ersten Gehäuseteil und ein zweiten Gehäuseteil auf. Die Anzeigeeinheit ist fest mit dem ersten Gehäuseteil verbunden und die eichrelevanten Bauteile und die Eichkappe sind mit dem zweiten Gehäuseteil verbunden. Das Sicherungselement kann durch das zweite Gehäuseteil geführt werden. Diese Ausgestaltung hat den Vorteil dass das zweite Gehäuseteil mit der Anzeige- und Bedieneinheit vom ersten Gehäuseteil entfernt werden kann, ohne dass das Gerät enteicht wird.

Zwischen dem ersten und dem zweiten Gehäuseteil kann eine Dichtung angeordnet sein. Beim Öffnen des Gehäuses besteht die Gefahr der Beschädigung der Dichtung. Es ist deshalb von Vorteil die Eichmarke überprüfen zu können, ohne das Gehäuse öffnen zu müssen.

Für das beschriebene Gerät kann durch die zumindest teilweise Entfernung des Sicherungselements der Zustand von "geeicht" zu "enteicht" geändert werden. Dies bietet den Vorteil, dass das Gerät auf einfache Weise enteicht werden kann.

Das Gerät zur Aufnahme von eichrelevanten und nicht-eichrelevanten Bauteilen wird anhand einer in den Zeichnungen dargestellten Ausführungsform im Folgenden beschrieben. Es zeigen:
- Figur 1: das Gerät insbesondere eine Waage in perspektivischer Ansicht;
- Figur 2: eine perspektivische Ansicht des geschlossenen Gehäuses;
- Figur 3: eine perspektivische Ansicht des geöffneten Gehäuses in Explosionsansicht;
- Figur 4: eine Draufsicht des Gehäuses;
- Figur 5: einen Schnitt durch das Gehäuse und
- Figur 6: eine perspektivische Ansicht der Unterseite des geschlossenen Gehäuses.

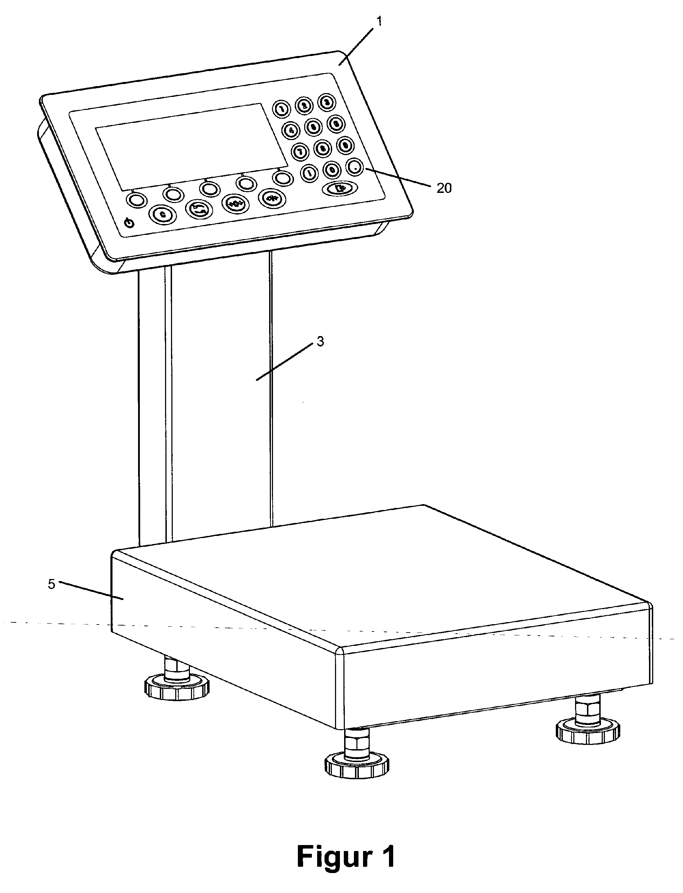

Figur 1 zeigt das Gerät insbesondere eine Waage mit einer Wägeplattform 5, einem Gehäuse 1, einer Anzeige- und Bedieneinheit 20 und einem Stativ 3. Das Stativ 3 hat ein oberes und unteres Ende. Am oberen Ende des Stativs 3 ist das Gehäuse 1 befestigt. Am Gehäuse 1 ist die Anzeige- und Bedieneinheit 20 angeordnet. Am unteren Ende des Stativs 3 ist die Wägeplattform 5 angeordnet. Zum Wiegen wird das zu wiegende Gut auf die Wägeplattform 5 gelegt. Auf der Anzeige- und Bedieneinheit 20 wird das Gewicht des zu wiegenden Guts angezeigt. Über die Anzeige- und Bedieneinheit 20 können beispielsweise Waageneinstellungen verändert werden.

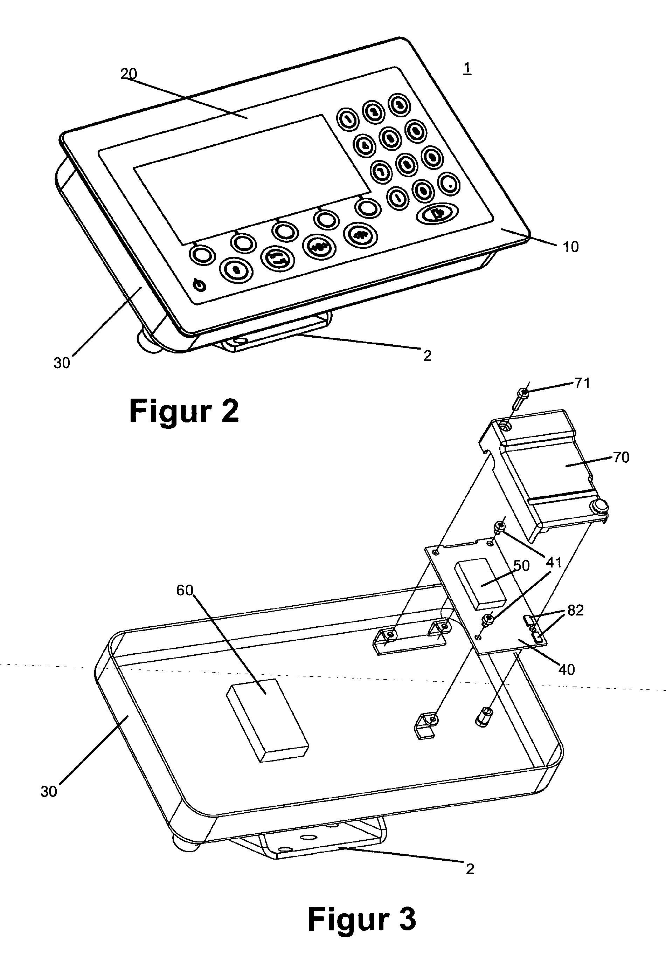

Figur 2 zeigt eine perspektivische Ansicht des geschlossenen Gehäuses 1. Das Gehäuse 1 weist ein erstes Gehäuseteil 10 und ein zweites Gehäuseteil 30 auf. An das Gehäuse 1 ist ein Verbindungselement 2 zur Verbindung des Gehäuses 1 mit dem Stativ 3 angeordnet. Das Verbindungselement 2 ist schwenkbar, wodurch die Position des auf ihm angebrachten Gehäuses 1 variierbar ist. Das erste Gehäuseteil 10 weist eine plane Aussenfläche auf, in der die Anzeige- und Bedieneinheit 20 angeordnet ist. Das zweite Gehäuseteil 30 ist haubenförmig ausgestaltet. Das erste Gehäuseteil 10 und das zweite Gehäuseteil 30 umschliessen einen Raum zur Aufnahme von eichrelevanten und nicht-eichrelevanten Bauteilen.

In Figur 3 sind das geöffnete Gehäuse 1 und die darin angeordneten Teile schematisch dargestellt. Am haubenförmigen zweiten Gehäuseteil 30 sind nicht-eichrelevante Bauteile 60 und eichrelevante Bauteile 50 angeordnet. Die nicht-eichrelevanten Bauteile 60 können bei geöffnetem Gehäuse 1 verändert werden ohne dass die eichrelevanten Bauteile 50 davon betroffen sind. Die eichrelevanten Bauteile 50 sind auf einem Trägerelement 40 angeordnet. Das Trägerelement 40 ist mit Hilfe von Befestigungselementen 41 an der Innenseite des zweiten Gehäuseteils 30 befestigt. Es können lösbare Befestigungselemente, wie zum Beispiel Schrauben verwendet werden. Es ist jedoch auch denkbar nicht-lösbare Befestigungselemente, wie beispielsweise Nieten zu verwenden. Über den eichrelevanten Bauteilen 50 und dem Trägerelement 40 ist eine Eichkappe 70 angeordnet. Die eichrelevanten Bauteile 50 sind dadurch zwischen dem zweiten Gehäuseteil 30 und der Eichkappe 70 angeordnet. Wird die Eichkappe 70 nicht entfernt, so behält das Gerät seinen geeichten Zustand bei. Die Eichkappe 70 ist mit mindestens einem Befestigungselemente 71 mit dem zweiten Gehäuseteil 30 verbunden. Die Eichkappe 70 schützt die eichrelevanten Bauteile 50 vor unbefugtem Zugriff. Aus diesem Grund muss die Eichkappe 70 so ausgestaltet sein, dass die eichrelevanten Bauteile 50 nur verändert werden können wenn die Eichkappe 70 zuvor entfernt wurde. Falls eine Veränderung der eichrelevanten Bauteile 50 durch eine berechtigte Person durchgeführt wurde, muss zur Eichung des Geräts 1 anschliessend die Eichkappe 70 wieder über den eichrelevanten Bauteilen 50 befestigt werden. Aus diesem Grund muss das Befestigungselement 71 reversibel lösbar sein. In der konkreten Ausgestaltung werden Schraubverbindungen verwendet. Das Befestigungselement 71 ist nur bei geöffnetem Gehäuse 1 zugänglich. Es ist auch möglich mehr als ein Befestigungselement 71 zu verwenden. Es ist auch möglich das Befestigungselement 71 mit einer Eichmarke vor unbefugtem Entfernen der Eichkappe 70 zu schützen. Es ist jedoch von erheblichem Vorteil die Eichmarke derart anzubringen, dass die Eichmarke auch bei ungeöffnetem Gehäuse 1 sichtbar ist.

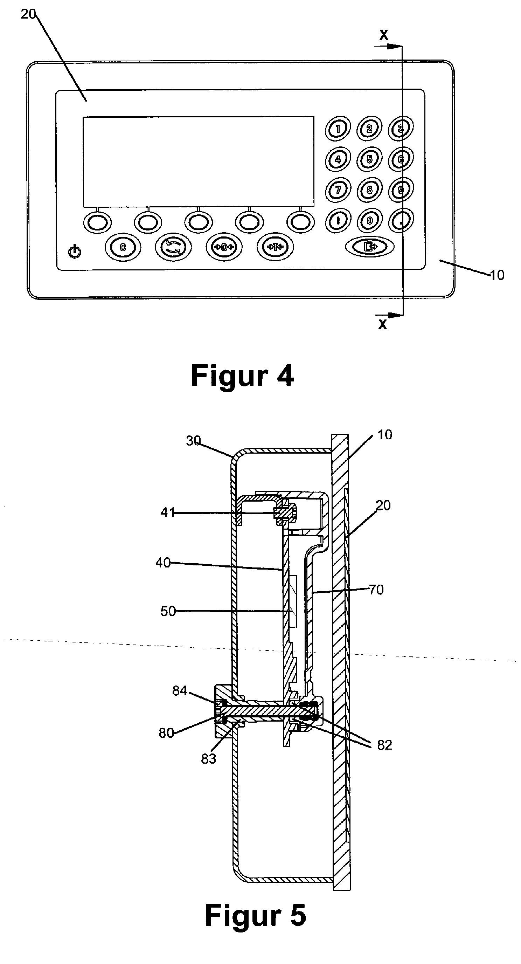

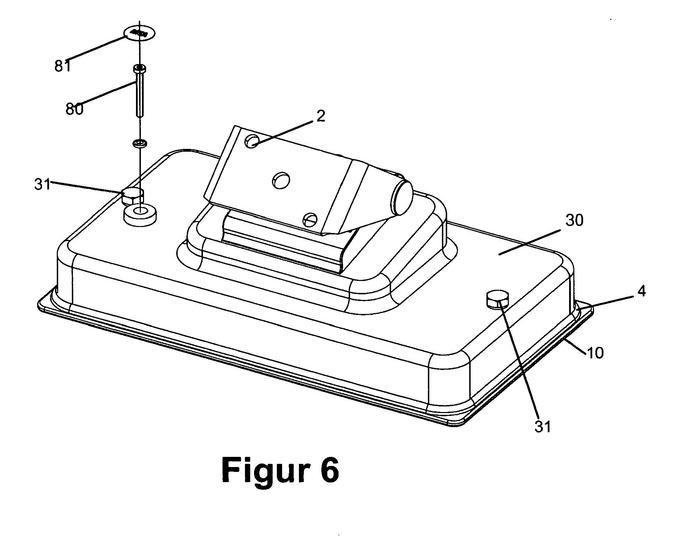

Eine mögliche Lösung ist in Figur 5 dargestellt. Figur 5 zeigt einen Schnitt an der Fläche X-X durch das in Figur 4 dargestellte Gehäuse 1. Das Sicherungselement 80 ist durch das haubenförmigen zweite Gehäuseteil 30 in das Innere des Gehäuses 1 geführt. Dort fixiert das Sicherungselement 81 die Eichkappe 70. In der dargestellten Ausführungsform ist das Sicherungselement 80 eine Schraube und die Eichkappe 70 weist ein Gewinde zur Aufnahme dieser Schraube auf. Zur zusätzlichen Sicherung wird das Sicherungselement 80 durch das Trägerelement 40 der eichrelevanten Bauteile 50 geführt. Dadurch wird das Trägerelement 40 und die darauf befestigten eichrelevanten Bauteile 50 zusätzlich fixiert. Durch diese Anordnung wird verhindert, dass die eichrelevanten Bauteile 40 unter der Eichkappe 70 hervorgezogen werden können. Idealerweise wird sichergestellt, dass das Sicherungselement 80 nur von ausserhalb des Gehäuses 1, jedoch nicht von innerhalb des Gehäuses 1 bewegt werden kann. In der gezeigten Ausführungsform wird deshalb das Sicherungselement 80 von einer Hülse 83, dem Trägerelement 40 und der Eichkappe 70 komplett umschlossen. Der Kopf der Schraube 84 wird wie in Figur 6 dargestellt durch eine Eichmarke 81 gesichert. Das Sicherungselement 80 kann somit nur verändert werden wenn zuvor die Eichmarke 81 beschädigt wurde. Falls die Eichmarkte 81 intakt ist, ist sicher gestellt dass die eichrelevanten Bauteile 40 nicht verändert wurden.

Durch Sensoren 82 kann die Position des Sicherungselements 80 erfasst werden. In der dargestellten Ausführungsform werden optische Sensoren 82 verwendet. Es können jedoch auch andere Typen von Sensoren verwendet werden.

Wie in Figur 3 und 5 dargestellt ist, besteht der optische Sensor 82 aus zwei Teilen. Ein Teil ist ein Sender, der andere Teil ist ein Empfänger. Der Sender sendet ein Lichtsignal aus. Falls sich das Sicherungselement 80 zwischen dem Sender und dem Empfänger befindet, kann der Empfänger kein Lichtsignal empfangen. Wird hingegen das Sicherungselement 80 soweit herausgedreht, dass der Empfänger ein Lichtsignal empfangen kann, so empfängt der Empfänger das Lichtsignal des Senders. Das Entfernen des Sicherungselements 80, und somit das Enteichen des Geräts 1, kann auf diese Weise durch den Sensor 82 erfasst werden. Der Sensor 82 kann ein Eichsignal mit Information über den Eichzustand des Geräts 1 ausgeben. Dieses Eichsignal kann beispielsweise dazu verwendet werden, den Eichzustand auf der Anzeigen- und Bedieneinheit 20 anzuzeigen.

Obwohl die Erfindung durch die Darstellung eines spezifischen Ausführungsbeispiels beschrieben worden ist, ist es offensichtlich, dass zahlreiche weitere Ausführungsvarianten in Kenntnis der vorliegenden Erfindung geschaffen werden können.

### Bezugszeichenliste

- 1: Gehäuse
- 2: Verbindungselement
- 3: Stativ
- 4: Dichtung
- 5: Wägeplattform
- 10: Erstes Gehäuseteil
- 20: Anzeige- und Bedieneinheit
- 30: Zweites Gehäuseteil
- 31: Befestigungselement des zweiten Gehäuseteils
- 40: Trägerelement
- 41: Befestigungselement des Trägerelements
- 50: Eichrelevante Bauteile
- 60: Nicht-eichrelevante Bauteile
- 70: Eichkappe
- 71: Befestigungselement der Eichkappe
- 80: Sicherungselement
- 81: Eichmarke
- 82: Sensor
- 83: Hülse
- 84: Kopf des Sicherungselements

## Patentansprüche

1. Gerät mit eichrelevanten und nicht-eichrelevanten Bauteilen (50, 60) und einem Gehäuse (1), das der Aufnahme der eichrelevanten und nicht-eichrelevanten Bauteile (50, 60) dient, wobei die eichrelevanten Bauteile (50) im Gehäuse (1) unter einer in Gehäuse (1) befindlichen Eichkappe (70) angeordnet sind und die eichrelevanten Bauteile (50) nur durch Entfernen dieser Eichkappe (70) zugänglich sind und die Eichkappe (70) derart durch eine Eichmarke (81) gesichert ist, dass bei einer Entfernung der Eichkappe (70) die Eichmarke (81) beschädigt wird **dadurch gekennzeichnet, dass** die Eichkappe (70) mit mindestens einem Sicherungselement (80) fixiert ist und die unter der Eichkappe (70) angeordneten eichrelevanten Bauteile (50) nur nach dem Entfernen des Sicherungselements (80) zugänglich sind und das mindestens eine Sicherungselement (80) bei geschlossenem Gehäuse (1) entfernbar ist.

2. Gerät nach Anspruch 1, **dadurch gekennzeichnet, dass** das bei geschlossenem Gehäuse (1) entfernbare Sicherungselement (80) mit der Eichmarke (81) gesichert ist und diese Eichmarke (81) bei geschlossenem Gehäuse (1) sichtbar ist.

3. Gerät nach einem der vorangehenden Ansprüche, **dadurch gekennzeichnet, dass** genau ein Sicherungselement (80) bei geschlossenem Gehäuse (1) entfernbar ist.

4. Gerät nach einem der vorangehenden Ansprüche, **dadurch gekennzeichnet, dass** das Sicherungselement (80) eine Schraube ist und die Eichkappe (70) ein Gewinde zur Aufnahme dieser Schraube aufweist.

5. Gerät nach einem der vorangehenden Ansprüche, **dadurch gekennzeichnet, dass** die eichrelevanten Bauteile (50) auf einem Trägerelement (40) angeordnet sind und das Trägerelement (40) unter der Eichkappe (70) angeordnet ist.

6. Gerät nach einem der vorangehenden Ansprüche, **dadurch gekennzeichnet, dass** das Gerät einen Sensor (82) zur Erfassung eines Positionswechsels des Sicherungselements (80) aufweist.

7. Gerät nach Anspruch 6, **dadurch gekennzeichnet, dass** der Sensor (82) einen Lichtsensor und/oder einen Drucksensor aufweist.

8. Gerät nach Anspruch 6 oder 7, **dadurch gekennzeichnet, dass** ein Signal des vom Sensor (82) erfassten Positionswechsels des Sicherungselements (80) an eine Ausgabeeinheit übermittelbar ist.

9. Gerät nach Anspruch 8, **dadurch gekennzeichnet, dass** das Gerät eine Anzeigeeinheit (20) aufweist und das Signal des Positionswechsels des Sicherungselements (80) auf der Anzeigeeinheit (20) anzeigbar ist.

10. Gerät nach einem der vorangehenden Ansprüche, **dadurch gekennzeichnet, dass** das Gerät eine Waage ist.

11. Gerät nach einem der vorangehenden Ansprüche, **dadurch gekennzeichnet, dass** das Gehäuse (1) einen ersten Gehäuseteil (10) und einen zweiten Gehäuseteil (30) aufweist und die Anzeigeeinheit (20) fest mit dem ersten Gehäuseteil (10) verbunden ist

12. Gerät nach-einem der vorangehenden Ansprüche, **dadurch gekennzeichnet, dass** die eichrelevanten Bauteile (50) mit dem zweiten Gehäuseteil (30) verbunden sind und dadurch das Gehäuse (1) geöffnet werden kann ohne die Eichmarke (81) zu beschädigen.

13. Verfahren zur Änderung des Zustandes von geeicht nach enteicht eines Geräts nach einem der vorangehenden Ansprüche, **dadurch gekennzeichnet, dass** das Sicherungselement (80) zumindest teilweise entfernt wird.

## Claims

1. Instrument comprising components (50) that are relevant as well as components (60) that are not relevant to regulatory compliance, and a housing (1) serving to accommodate said components (50, 60), wherein the components (50) that are relevant to regulatory compliance are arranged in the housing (1) under a verification cap (70), so that they can only be accessed by removing the verification cap (70), and wherein the verification cap (70) is secured with a verification mark (81) in such a way that removing the verification cap (70) will cause the verification mark (81) to be destroyed, **characterized in that** the verification cap (70) is fastened with at least one locking element (80), that the components (50) that are relevant to regulatory compliance are accessible only after the locking element (80) has been removed, and that at least one locking element (80) is designed so that it can be removed while the housing (1) remains closed.

2. Instrument according to claim 1, **characterized in that** the locking element (80) which is capable of being removed while the housing (1) remains closed is secured with a verification mark (81), and that said verification mark (81) is visible when the housing (1) is in the closed state.

3. Instrument according to one of the preceding claims, **characterized in that** exactly one locking element (80) is capable of being removed while the housing (1) remains closed.

4. Instrument according to one of the preceding claims, **characterized in that** the locking element (80) is a screw, and that the verification cap (70) comprises a screw thread to receive said screw.

5. Instrument according to one of the preceding claims, **characterized in that** the components (50) that are relevant to regulatory compliance are arranged on a carrier element (40), and that the carrier element (40) is arranged underneath the verification cap (70).

6. Instrument according to one of the preceding claims, **characterized in that** the instrument comprises a sensor (82) operable to detect a change in position of the locking element (80).

7. Instrument according to claim 6, **characterized in that** the sensor (82) comprises a light sensor and/or a pressure sensor.

8. Instrument according to claim 6 or 7, **characterized in that** a signal representing the change in position of the locking element (80) detected by sensor (82) can be transmitted to an output unit.

9. Instrument according to claim 8, **characterized in that** the instrument comprises a display unit (20) and that the signal representing the change in position of the locking element (80) can be indicated on the display unit (20).

10. Instrument according to one of the preceding claims, **characterized in that** the instrument is a weighing scale.

11. Instrument according to one of the preceding claims, **characterized in that** the housing (1) comprises a first housing part (10) and a second housing part (30) and that the display unit (20) is solidly connected to the first housing part (10).

12. Instrument according to one of the preceding claims, **characterized in that** the components that the components (50) that are relevant to regulatory compliance are connected to the second housing part (30) and that, as a consequence, the housing (1) can be opened without destroying the verification mark (81).

13. Method of changing the status of an instrument according to one of the preceding claims from verified to non-verified, **characterized in that** the locking element (80) is removed at least partially.

## Revendications

1. Dispositif avec des pièces destinées à l'étalonnage et des pièces non destinées à l'étalonnage (50, 60) et avec un boîtier (1) destiné à recevoir les pièces destinées à l'étalonnage et des pièces non destinées à l'étalonnage (50, 60), dans lequel les pièces destinées à l'étalonnage (50) sont agencées dans le boîtier (1) sous un chapeau d'étalonnage (70) situé dans le boîtier (1), et les pièces destinées à l'étalonnage (50) ne sont accessibles qu'en retirant ce chapeau d'étalonnage (70), et le chapeau d'étalonnage (70) est fixé par une marque d'étalonnage (81), de manière à ce que la marque d'étalonnage (81) soit endommagée par le retrait du chapeau d'étalonnage (70), **caractérisé en ce que** le chapeau d'étalonnage (70) est fixé par au moins un élément de fixation (80), et les pièces destinées à l'étalonnage (50) agencées sous le chapeau d'étalonnage (70) ne sont accessibles qu'après le retrait de l'élément de fixation (80), et l'au moins un élément de fixation (80) peut être ôté lorsque le boîtier (1) est fermé.

2. Dispositif selon la revendication 1, **caractérisé en ce que** l'élément de fixation (80) apte à être ôté lorsque le boîtier (1) est fermé est fixé avec la marque d'étalonnage (81), et cette marque d'étalonnage (81) est visible lorsque le boîtier (1) est fermé.

3. Dispositif selon l'une des revendications précédentes, **caractérisé en ce que** précisément un élément de fixation (80) peut être ôté lorsque le boîtier (1) est fermé.

4. Dispositif selon l'une des revendications précédentes, **caractérisé en ce que** l'élément de fixation (80) est une vis et le chapeau d'étalonnage (70) comporte un filet pour recevoir cette vis.

5. Dispositif selon l'une des revendications précédentes, **caractérisé en ce que** les pièces destinées à l'étalonnage (50) sont agencées sur un élément de support (40) et l'élément de support (40) est installé sous le chapeau d'étalonnage (70).

6. Dispositif selon l'une des revendications précédentes, **caractérisé en ce que** le dispositif comporte un capteur (82) pour la détection d'un changement de position de l'élément de fixation (80).

7. Dispositif selon la revendication 6, **caractérisé en ce que** le capteur (82) comporte un capteur de lumière et/ou un capteur de pression.

8. Dispositif selon la revendication 6 ou 7, **caractérisé en ce qu'**un signal de changement de position des l'élément de fixation (80) détecté par le capteur (82) peut être transmis à une unité de sortie.

9. Dispositif selon la revendication 8, **caractérisé en ce que** le dispositif comporte une unité d'affichage (20) et le signal du changement de position de l'élément de fixation (80) peut être affiché sur l'unité d'affichage (20).

10. Dispositif selon l'une des revendications précédentes, **caractérisé en ce que** le dispositif est une balance.

11. Dispositif selon l'une des revendications précédentes, **caractérisé en ce que** le boîtier (1) comporte une première partie de boîtier (10) et une deuxième partie de boîtier (30), et l'unité d'affichage (20) est reliée fixement à la première partie de boîtier (10).

12. Dispositif selon l'une des revendications précédentes, **caractérisé en ce que** les pièces destinées à l'étalonnage (50) sont reliées à la deuxième partie de boîtier (30), permettant ainsi d'ouvrir le boîtier (1) sans endommager la marque d'étalonnage (81).

13. Procédé pour le passage de l'état étalonné à l'état non étalonné d'un dispositif, selon l'une des revendications précédentes, **caractérisé en ce que** l'élément de fixation (80) est ôté au moins partiellement.
